# NEUE EUROPÄISCHE PATENTSCHRIFT

(11) **EP 1 245 326 B2**
(45) Veröffentlichungstag und Bekanntmachung des Hinweises auf die Entscheidung über den Einspruch: **19.11.2008**
(45) Hinweis auf die Patenterteilung: 09.03.2005
(21) Anmeldenummer: 02007001.7
(22) Anmeldetag: 27.03.2002
(51) Int. Cl.: B23K 26/06, B23K 26/36, B41C 1/05, B41C 1/10

(54) **Verfahren zum Betreiben einer Lasergravureinrichtung**
Method for operating a laser engraving machine
Procédé d'opérer un appareil de gravure au laser

(30) Priorität: 30.03.2001 DE 10116093
(43) Veröffentlichungstag der Anmeldung: 02.10.2002
(73) Patentinhaber: Schepers GmbH + Co. KG, 48691 Vreden (DE)
(72) Erfinder: Brüning, Stephan, 48691 Vreden (DE); Schepers, Hans-Georg, 48691 Vreden (DE)
(74) Vertreter: Schulze Horn, Kathrin

(56) Entgegenhaltungen:
- EP-A- 1 068 923
- US-A- 3 931 458
- US-A- 5 227 850
- US-A- 5 416 298
- US-A- 5 748 222
- US-A- 5 856 648
- EP-B-0422957 DE-A-19840926 wo-a-0013839 & SCHRÖDER: 'TECHNISCHE OPTIK KURZ UND BÜNDIG', 1974, VOGEL-VERLAG, ISBN 3-8023-0067X & ELECTRO-OPTICAL: 'Acoustic-Optic X-Y Scanning system' 2000 - 2001, & LEOT LASER TUTORIAL: 'Course 6: laser and Electro-Optics Components Module 6-7 Prims' THE CENTER FOR OCCUPATIONAL RESEARCH AND DEVELOPMENT 1987,

## Beschreibung

Die vorliegende Erfindung betrifft Verfahren zum Betreiben einer Lasergravureinrichtung für die Gravur von Druck- oder Prägeformen, mit einem Laser, mit einem eine erste Modulationsfrequenz erzeugenden Frequenzgenerator und mit einem dem Laser nachgeordneten, mit der ersten Modulationsfrequenz speisbaren akusto-optischen Modulator zur frequenzabhängigen Laserstrahlablenkung und -aufteilung, wobei von dem Modulator aus ein Laserstrahlweg in einen Absorber führt und ein zweiter Laserstrahlweg durch eine den Laserstrahl formende Anpassungsoptik und durch eine den Laserstrahl fokussierende Fokussieroptik zu einem Fokuspunkt auf der Oberfläche der zu gravierenden Druck- oder Prägeform führt, wobei mindestens eine sich von der ersten Modulationsfrequenz unterscheidende weitere Modulationsfrequenz erzeugt und dem akusto-optischen Modulator neben der ersten Modulationsfrequenz gleichzeitig zugeführt wird, wodurch der Laserstrahl im akusto-optischen Modulator neben einer ersten Ablenkung mindestens eine sich winkelmäßig von der ersten unterscheidende weitere Ablenkung und dadurch eine weitere Aufteilung erfährt und wobei so mindestens ein weiterer Laserstrahlweg gebildet wird, der zu mindestens einem weiteren Fokuspunkt ebenfalls auf der Oberfläche der Druck- oder Prägeform führt. Der akusto-optische Modulator wird, sobald ihm mehrere Frequenzen zugeführt werden, auch als Deflektor bezeichnet.

Das Dokument US 5 416 298 A offenbart ein Verfahren der eingangs angegebenen Art. Weiterhin ist für das aus diesem Dokument bekannte Verfahren charakteristisch, daß jeder Fokuspunkt auf der Oberfläche der Druck- oder Prägeform dort eine Vertiefung in Form einer vollständigen Zelle oder eines vollständigen Näpfchens erzeugt. Der Laserstrahl wird hierzu durch den akusto-optischen Modulator gepulst. Um eine ausreichende Laserstrahlenergie in den gewünschten Fokuspunkt zur Erzeugung einer vollständigen Zelle oder eines vollständigen Näpfchens einzutragen, wird der Laserstrahl so in Drehrichtung der rotierenden Druck- oder Prägeform abgelenkt, daß der Fokuspunkt mit der gleichen Geschwindigkeit, wie sie die Druckformoberfläche in Umfangsrichtung aufweist, mit dieser mitwandert. Dadurch wird erreicht, daß der Laserstrahl für eine längere Zeit den vorgegebenen Fokuspunkt auf der Druckformoberfläche trifft. Durch den für eine relativ lange Zeit auftreffenden Laserstrahl wird unmittelbar Material aus der Oberfläche oder Druckform verdampft, wobei es sich bei der Oberfläche gemäß dem zitierten Dokument um eine keramische Oberfläche handelt.

Außerdem geht aus diesem Dokument bereits hervor, daß die Möglichkeit besteht, durch Einspeisung weiterer Modulationsfrequenzen in den akusto-optischen Modulator einen oder mehrere weitere Laserstrahlwege, die zur Oberfläche der zu gravierenden Druckform führen, zu erzeugen. Dabei liegen aber in jedem Falle die erzeugten Fokuspunkte auf der Oberfläche der Druckform immer auf einer Linie.

Die Anordnung von mehreren Fokuspunkten auf einer geraden Fokuspunktlinie führt zu dem Problem, daß eine vorhandene Anpassungsoptik und Fokussieroptik in ihrer Dimension an die Länge der Linie angepaßt werden muß, auf der die Laserstrahlen durch die Anpassungsoptik und Fokussieroptik laufen. Da die Anpassungsoptik und die Fokussieroptik aus Linsen bestehen, die üblicherweise rund sind, wird dabei die Fläche der Anpassungsoptik und Fokussieroptik schlecht ausgenutzt.

Eine weitere Lasergravureinrichtung ist aus WO 97/19783 bekannt. Dieses Dokument beschreibt eine Lasergravuranlage zum Gravieren einer Werkstückoberfläche, mit einer Laserstrahlquelle, einem im Strahlengang der Laserstrahlquelle liegenden Modulator, einer dem Modulator nachgeordneten Optik, die mit Abstand von der Werkstückoberfläche angeordnet ist, wobei Optik und Werkstück relativ zueinander bewegt werden, und einer Steuereinrichtung, die den Modulator mit einem Steuersignal ansteuert, so daß dessen auf die Werkstückoberfläche auftreffende Ausgangsstrahlung nach Maßgabe des Steuersignals moduliert ist und die Werkstückoberfläche entsprechend tief bearbeitet. Bei dem Werkstück kann es sich beispielsweise um eine Walze mit einer Gummi- oder Kunststoffbeschichtung handeln. Weiterhin ist bei dieser bekannten Lasergravuranlage eine zweite Laserstrahlquelle vorgesehen, die von der Steuereinrichtung mit einem zweiten Steuersignal angesteuert wird. Dabei sollen die Feinstrukturen des in der Werkstückoberfläche zu erzeugenden Profils von dem über den Modulator geführten ersten Laserstrahl gebildet werden, während die Tiefenbereiche des Profils von dem Laserstrahl des zweiten Lasers gebildet werden sollen. Dazu werden der Modulator einerseits und die zweite Laserstrahlquelle andererseits von miteinander zusammenhängenden, aber getrennten Steuersignalen angesteuert. Die beiden senkrecht zueinander polarisierten Laserstrahlen von dem Modulator einerseits und der zweiten Laserstrahlquelle andererseits werden von einem selektiven Spiegel transmittiert bzw. reflektiert und gemeinsam über eine Optik auf die zu bearbeitende Werkstückoberfläche geleitet.

Ersichtlich ist bei dieser Lasergravureinrichtung der technische Aufwand relativ hoch, da zwei Laser eingesetzt werden müssen. Zudem ist diese Lasergravuranlage nur wirtschaftlich einsetzbar, wenn besonders große Gravurtiefen erzielt werden sollen, die mit Einsatz eines einzelnen Lasers nicht erreicht werden.

Aus der EP 1 068 923 ist ein Verfahren bekannt, mit dem in einer Lasergravureinrichtung die Intensitätsverteilung des Laserstrahls im Fokuspunkt schnell änderbar ist. Hierzu werden wenigstens zwei Teilstrahlen mit unterschiedlicher Intensitätsverteilung verwendet, die zu einem Arbeitsstrahl zusammengeführt werden. Dadurch, daß die Intensität der Teilstrahlen einzeln veränderbar ist, kann die Intensitätsverteilung innerhalb des Fokuspunktes des zusammengeführten Laserstrahls in gewünschter Weise verändert und so an unterschiedliche Anwendungen angepaßt werden. Hiermit kann zwar bei der Herstellung von Druckzylindern beispielsweise die Form von Tiefdrücknäpfchen in der Druckformoberfläche vorteilhaft beeinflußt werden, jedoch wird hiermit eine Beschleunigung der Gravur nicht erreicht.

Für die vorliegende Erfindung stellt sich die Aufgabe, ein Verfahren der eingangs genannten Art zu schaffen, bei dem eine bessere Ausnutzung der Anpassungsoptik und der Fokussieroptik erzielt wird.

Eine erste Lösung der Aufgabe gelingt erfindungsgemäß mit einem Verfahren nach Anspruch 1.

Mit einer solchen erfindungsgemäß erzeugten Fokusmatrix kann die in der Regel runde oder quadratische Strahldurchtrittsfläche der Anpassungs- und Fokussieroptik flächenmäßig besser ausgenutzt werden, sodaß kleinere Strahldurchtrittsflächen ausreichen als bei einer längeren eindimensionalen Fokusreihe mit gleicher Anzahl von Fokuspunkten. Außerdem wird die Möglichkeit geschaffen, entweder einen Gravurpunkt nacheinander mit zwei Laserstrahlen zu gravieren oder die Druck- oder Prägeform bei der Gravur mit höherer Geschwindigkeit rotieren zu lassen, da nun auch mehrere in Umfangsrichtung der Form benachbarte Gravurpunkt gleichzeitig bearbeitet werden können.

Eine erste Weiterbildung des Verfahrens sieht vor, daß die zur ersten Ebene verdrehte zweite Ebene zur ersten Ebene senkrecht ist. Die Fokusmatrix hat so eine einfache, rechtwinklige Geometrie.

In weiterer Ausgestaltung ist vorgesehen, daß die Modulationsfrequenzen variabel sind und jeweils auf eine gewünschte Frequenz eingestellt werden. Damit besteht die Möglichkeit, durch Wahl der Modulationsfrequenzen und ihres Frequenzabstandes voneinander den Winkel der Ablenkung der zur Oberfläche der Druck- oder Prägeform führenden Laserstrahlwege absolut und relativ zueinander zu beeinflussen, so daß auf diese Weise sowohl die Lage als auch der Abstand der erzeugten Fokuspunkte relativ zueinander in gewünschter Weise beeinflußbar ist. Durch den Frequenzabstand oder -unterschied der Modulationsfrequenzen wird der Unterschied der Laserstrahlablenkung auf den verschiedenen Laserstrahlwegen und dadurch der Abstand der Fokuspunkte voneinander bestimmt. Hierfür werden zweckmäßig entweder ein oder mehrere mehrkanalige oder mehrere einkanalige Frequenzgeneratoren eingesetzt, die hinsichtlich der Modulationsfrequenzen und der Frequenzunterschiede zum einen möglichst exakt und stabil arbeiten müssen und zum anderen durch eine Steuereinheit gezielt beeinflußbar sein müssen. Da die in den Modulator eingespeisten Modulationsfrequenzen jeweils für sich moduliert werden können, kann auch der Laserstrahl in jedem der erzeugten Fokuspunkte individuell in gewünschter bzw. erforderlicher Weise ein- und ausgeschaltet werden, sodaß eine mehrkanalige Bearbeitung ermöglicht wird.

Bevorzugt ist dabei weiter vorgesehen, daß als weitere Modulationsfrequenz(en) jeweils eine Frequenz erzeugt und dem akusto-optischen Modulator zugeführt wird, die sich so von der ersten Modulationsfrequenz unterscheidet, daß die erzeugten Fokuspunkte relativ zueinander einen lateralen Abstand einnehmen, der einem Gravurvorschub bei einem einzelnen Fokuspunkt entspricht. Hiermit wird erreicht, daß bei der Gravur einer Druck- oder Prägeform mehrere Spuren parallel bearbeitet werden, wobei diese Spuren unmittelbar benachbart sind. Bei einer Fokusmatrix von vier Fokuspunkten wird die Bearbeitungsgeschwindigkeit zumindest verdoppelt oder sogar vervierfacht, je nach dem, ob man einen Gravurpunkt nacheinander mit zwei Laserstrahlen oder mit nur je einem einzigen Laserstrahl graviert. Dabei sind die auf der steuerungstechnischen Seite erforderlichen Änderungen bei dieser Variante des Verfahrens besonders einfach, da nun der Unterschied nur darin besteht, daß zwei benachbarte Spuren und ggf. zwei in Spurrichtung voneinander beabstandete Gravurpunkte nicht nacheinander sondern parallel zueinander gleichzeitig abgearbeitet werden. Dabei können elektronisch gespeicherte Gravurdaten für eine bisher übliche einkanalige oder eindimensionale mehrkanalige Gravur ohne größere Änderungen auch für die zweidimensionale mehrkanalige Gravur übernommen werden, da die Lage der einzelnen Fokuspunkte, denen je ein Gravurdatenwert zugeordnet ist, unverändert bleibt. Lediglich die Reihenfolge des Abrufs der Daten ändert sich. Die für diese Änderung erforderlichen Maßnahmen innerhalb von Steuerprogrammen für die Steuerung des Ablaufs des Verfahrens und des Betriebes der Lasergravureinrichtung halten sich in Grenzen, so daß auch hier nur ein beschränkter Aufwand erforderlich ist, der sich durch die mindestens verdoppelte Bearbeitungsgeschwindigkeit bei der Gravur in kurzer Zeit amortisiert.

Eine andere Weiterbildung sieht vor, daß jede weitere Modulationsfrequenz einen festen Frequenzabstand von der ersten Modulationsfrequenz aufweist. Diese Verfahrensausgestaltung bietet den Vorteil, daß, wie durch Versuche festgestellt wurde, eine höhere Belastung des Modulators möglich wird, wenn die Frequenzen günstig gewählt werden.

Weiter ist dabei bevorzugt vorgesehen, daß die Frequenzabstände zwischen je zwei benachbarten Modulationsfrequenzen'gleich sind. Damit erhalten die erzeugten Fokuspunkte innerhalb der von ihnen gebildeten Fokusmatrix einen untereinander gleichmäßigen Abstand, was für die Gravur von in einem regelmäßigen Raster angeordneten Gravurpunkten vorteilhaft und zweckmäßig ist.

Eine zweite Lösung der Aufgabe gelingt erfindungsgemäß mit einem Verfahren nach Anspruch 7.

Dieses zweite erfindungsgemäße Verfahren erreicht auf einem zweiten Weg, daß auf der Oberfläche der Druck- oder Prägeform die Fokuspunkte in Form einer zweidimensionalen Fokusmatrix mit wenigstens vier oder auch mehr Fokuspunkten erzeugt werden. Die damit erreichten Vorteile stimmen mit den oben erläuterten Vorteilen der ersten Lösung überein. Die zweite Lösung bietet darüber hinaus den spezifischen Vorteil, daß jeweils die Leistungsmodulation auf der einen Seite und die Aufteilung in die verschiedenen zur zu gravierenden Oberfläche führenden Laserstrahlwege auf der anderen Seite für sich optimiert werden kann, da hier diese Vorgänge in verschiedenen Komponenten der Gravureinrichtung ablaufen. Hierdurch kann eine höhere Gravurqualität erreicht werden.

Bevorzugt ist weiter vorgesehen, daß der als zweiter Deflektor dienende akusto-optische Modulator, der eine relativ zum ersten Deflektor um seine Längsmittelachse verdrehte Ausrichtung aufweist, um 90° verdreht ist. Die Fokusmatrix erhält so eine einfache, rechtwinklige Geometrie.

Um bei der zweiten Lösung den lateralen Abstand der Fokuspunkte mit möglichst wenig Aufwand und ohne Veränderung der Modulationsfrequenzen verändern zu können, schlägt die Erfindung vor, daß der Modulator oder der als Deflektor eingesetzte (zweite) Modulator oder die beiden als Deflektoren eingesetzten Modulatoren um seine/ihre Längsmittelachse um einen vorgebbaren Winkel verdreht wird/werden, wodurch die Anordnung der austretenden Laserstrahlwege und eine durch deren Fokuspunkte auf der Oberfläche der zu gravierenden Druck- oder Prägeform gebildete Fokusmatrix eine entsprechende Verdrehung um diesen Winkel erfährt. Bei einem Winkel von 0° entspricht der laterale Abstand dem Abstand der Fokuspunkte zueinander; bei 90° ist der laterale Abstand gleich Null, da dann die Fokuspunkte auf mehreren in Umfangsrichtung, also senkrecht zur Lateralrichtung laufenden Linien liegen. Mit dieser Drehung kann der laterale Fokuspunktabstand leicht verändert und an einen vorgegebenen Rasterabstand der zu erzeugenden Gravur angepaßt werden. Die dabei zwangsläufig gleichzeitig in Umfangsrichtung der Form auftretende Verschiebung der Fokuspunkte wird durch entsprechende Korrekturparameter in der Steuersoftware berücksichtigt und korrigiert. Eine Korrektur des radialen Abstandes der Fokuspunkte von der Oberfläche der Form ist nicht erforderlich, weil die Laserstrahlen im Bereich der Formoberfläche eine ausreichend große Tiefenschärfe haben.

Alternativ besteht bei der zweiten Lösung die Möglichkeit, daß anstelle des Modulators oder des als Deflektor eingesetzten zweiten Modulators oder der beiden als Deflektoren eingesetzten Modulatoren die vorhandene Anpassungsoptik oder eine zusätzliche Anpassungsoptik für die Verdrehung der Anordnung der Laserstrahlwege und der Fokusmatrix eingesetzt wird. Die Drehung wird nun zwar an einer anderen Stelle der Einrichtung erzeugt; die Auswirkungen und Vorteile entsprechen aber den zuvor beschriebenen.

Um den oder die eingesetzten Modulatoren bei der zweiten Lösung gegen Überlastung und dadurch entstehende Schäden und Fehlfunktionen zu schützen, wird vorgeschlagen, daß als Modulator ein Modulatorkristall mit wenigstens zwei parallelen akusto-optischen Feldern eingesetzt wird, wobei je einer der wenigstens zwei eintretenden Laserstrahlen in je eines der Felder eingeleitet wird und wobei jedes akusto-optische Feld über einen gemeinsamen oder je einen eigenen Frequenzgenerator mit je zwei oder mehr Modulationsfrequenzen gespeist wird. Die durch die in die Modulatoren eingespeisten Modulationsfrequenzen hervorgerufenen Schwingungen bleiben hier jeweils innerhalb eines der zwei oder mehr Bereiche jedes Modulatorkristalls, ohne sich jeweils im gesamten Kristall auszubreiten. Insbesondere werden so auch gegenseitige Störungen der Modulation, die ansonsten durch Interferenz auftreten könnten, sicher vermieden.

Je nach Leistungsbedarf für die Gravur und je nach Leistungsfähigkeit des Lasers können bei der zweiten Lösung die zuvor erwähnten wenigstens zwei in den Modulator eintretenden Laserstrahlen durch einen Laser mit mindestens einem nachgeschalteten Strahlteiler oder durch wenigstens zwei Laser erzeugt werden. Der Einsatz von zwei oder mehr Lasern erhöht zwar den Aufwand, erlaubt aber die Erzeugung wesentlich höherer Gesamt-Laserleistungen, wobei die Leistung jedes Lasers aber immer auf mehrere Laserstrahlwege aufgeteilt wird.

Um auch bei der vorstehend erläuterten Verfahrensausführung eine bedarfsweise Veränderung des lateralen Abstandes der Fokuspunkte auf der Form zu ermöglichen, ist vorgesehen, daß der/die Strahlteiler und der Modulator oder die wenigstens zwei Laser und der Modulator um die Längsmittelachse des Modulators synchron um einen vorgebbaren Winkel verdreht werden, wodurch die Anordnung der aus dem Modulator austretenden Laserstrahlwege und die durch deren Fokuspunkte auf der Oberfläche der zu gravierenden Druck- oder Prägeform gebildete Fokusmatrix eine entsprechende Verdrehung um diesen Winkel erfahren. Auch hier ist der Aufwand für die Drehung der Fokusmatrix relativ gering und die Drehung ist so ohne Probleme mit der nötigen Genauigkeit durchführbar.

Alternativ besteht auch hier bei der zweiten Lösung die Möglichkeit, daß anstelle des/der Strahlteiler(s) und des Modulators oder der wenigstens zwei Laser und des Modulators die vorhandene Anpassungsoptik oder eine zusätzliche Anpassungsoptik für die Verdrehung der Anordnung der Laserstrahlwege und der Fokusmatrix eingesetzt wird.

Im einfachsten Fall wird durch die Modulation jeder einem der Laserstrahlwege zugeordnete Laserstrahl nur ein- oder ausgeschaltet, was für viele Gravuranwendungen schon ausreichen ist. Für manche Anwendungsfälle, insbesondere bei der Gravur von Prägeformen mit dreidimensional strukturierter Oberfläche, ist aber vorteilhaft vorgesehen, daß die Leistung der über die Laserstrahlwege zu den Fokuspunkten auf der Oberfläche der Druck- oder Prägeform laufenden Laserstrahlen individuell oder in Gruppen gesteuert wird. Besondere Mittel oder Komponenten sind hierfür nicht nötig; die gewünschte gruppenweise oder individuelle Leistungssteuerung der Laserstrahlen kann vorteilhaft durch entsprechende Steuerung der Amplituden der ohnehin erzeugten Modulationsfrequenzen bewirkt werden.

Weiterhin ist bevorzugt vorgesehen, daß alle zu den Fokuspunkten auf der Oberfläche der Druck- oder Prägeform laufenden Laserstrahlwege durch dieselbe Anpassungsoptik und durch dieselbe Fokussieroptik geführt werden. Diese gemeinsame Führung der Laserstrahlwege ist vorteilhaft, weil dadurch keine zusätzlichen Anpassungs- und Fokussieroptiken benötigt werden. Technisch gesehen stellt diese gemeinsame Führung kein Problem dar, weil die in zwei Dimensionen vorliegenden Abstände der Laserstrahlwege untereinander so klein sind, daß jeweils eine einzige Anpassungsoptik und Fokussieroptik eingesetzt werden kann, ohne daß es zu Abschattungen von einzelnen Laserstrahlwegen kommt. Außerdem ist auf diese Weise mit geringem Aufwand die Nachrüstung von vorhandenen Lasergravureinrichtungen möglich, da keine weiteren Anpassungsoptiken und Fokussieroptiken zusätzlich erforderlich sind. Eingriffe in das empfindliche optische System der Anpassungs- und Fokussieroptik der vorhandenen Lasergravureinrichtung sind dann nicht erforderlich. Im einfachsten Fall können sich die Änderungen sogar auf den elektronischen Teil der Einrichtung, insbesondere auf die für die Erzeugung der Modulationsfrequenzen sowie die für die Übertragung von Gravursteuerdaten aus einem Datenspeicher zum Modulationsfrequenzgenerator zuständigen Einrichtungsteile, beschränken.

Gemäß einer weiteren Ausgestaltung ist vorgesehen, daß die zu den Fokuspunkten auf der Oberfläche der Druckoder Prägeform laufenden Laserstrahlwege zumindest zum Teil durch je eine individuelle Anpassungsoptik oder zeilen- oder spaltenweise zusammengefaßt durch je eine Gruppen-Anpassungsoptik geführt werden. Dabei können die individuellen Anpassungsoptiken oder die Gruppen-Anpassungsoptiken jeweils allein oder in Kombination mit einer gemeinsamen Anpassungsoptik eingesetzt werden. Die Verwendung einer oder mehrere Gruppen-Anpassungsoptiken ist insbesondere beim Einsatz von Modulatoren mit zwei oder mehr Modulations-Schallfeldern vorteilhaft, weil hier eine starke laterale Trennung der Laserstrahlwege vorliegt. Es kann dann die Intensitätsverteilung der Laserstrahlung jeder Zeile oder Spalte von Fokuspunkten dem jeweiligen Bedarf angepaßt und so optimiert werden. Insbesondere kann die Abtragungsgeometrie der einzelnen Fokuspunkt-Zeile oder -Spalte so eingestellt werden, daß die Intensitätsverteilung der Gesamt-Fokusmatrix völlig variabel ist. Hierdurch kann die laterale wie transversale Abtragungsgeometrie den auf der Formoberfläche abzutragenden Bereichen der Form angepaßt werden.

Im folgenden werden zur Erläuterung und zum leichteren Verständnis der Erfindung anhand einer Zeichnung zunächst Lasergravureinrichtungen nach dem Stand der Technik und daran anschließend Ausführungsbeispiele von Lasergravureinrichtungen und Verfahren zu deren Betreiben gemäß der vorliegenden Erfindung erläutert. Die Figuren der Zeichnung zeigen:
- Figur 1: eine erste Lasergravureinrichtung gemäß dem Stand der Technik in schematischer Darstellung,
- Figur 2: eine zweite Lasergravureinrichtung gemäß dem Stand der Technik, ebenfalls in schematischer Darstellung,
- Figur 3: eine dritte Lasergravureinrichtung, wieder in schematischer Darstellung,
- Figur 4: einen Modulator als Teil der Einrichtung aus Figur 3 in unterschiedlich gedrehten Lagen zusammen mit einer dadurch jeweils erzeugten Fokusreihe,
- Figur 5: die obere Fokusreihe gemäß Figur 4 in einer vergrößerten Darstellung und
- Figur 6: die zweite Fokusreihe aus Figur 4, ebenfalls in vergrößerter Darstellung.
- Figur 7: zeigt eine erste Lasergravureinrichtung die nach dem erfindungsgemäßen Verfahren betreibbar ist in einer schematischen Draufsicht,
- Figur 8: die Einrichtung aus Figur 7 in einer schematischen Seitenansicht,
- Figur 9: eine zweite Lasergravureinrichtung die nach dem erfindungsgemäßen Verfahren betreibbar ist in einer schematischen Seitenansicht,
- Figur 10: die Einrichtung aus Figur 9 in einer schematischen Draufsicht,
- Figur 11: eine mit der Gravureinrichtung gemäß Figur 7 und Figur 8 oder gemäß Figur 9 und Figur 10 erzeugte Fokusmatrix in Draufsicht und
- Figur 12: die Fokusmatrix aus Figur 11 nach einer Drehung, ebenfalls in Draufsicht.

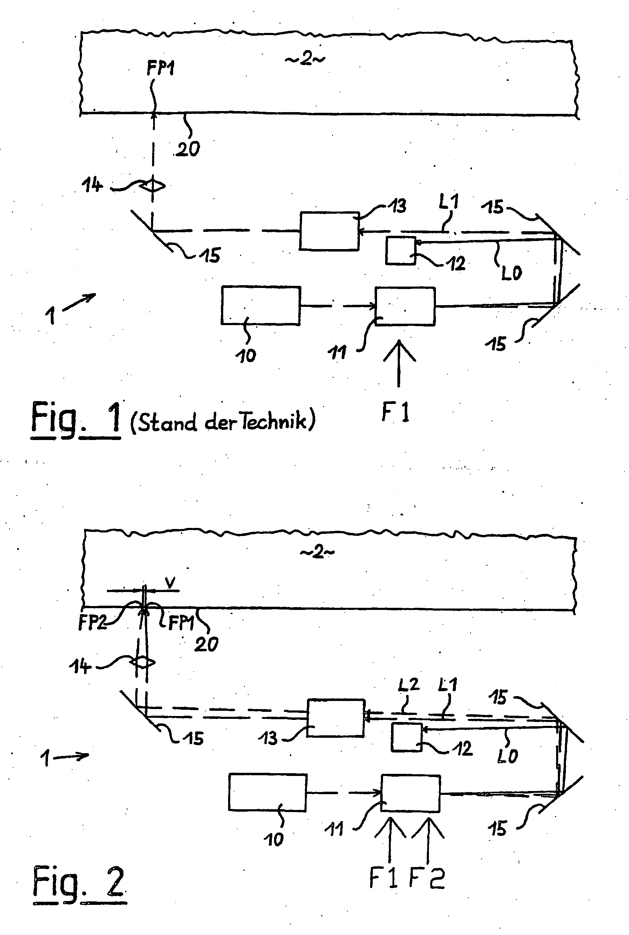

Figur 1 der Zeichnung zeigt eine erste Lasergravureinrichtung 1 nach dem bekannten Stand der Technik. Weiterhin ist oben in Figur 1 ausschnittsweise eine Druck- oder Prägeform 2 gezeigt, die hier Zylinderform hat und um ihre Längsmittelachse drehbar eingespannt ist. Zwischen der Lasergravureinrichtung 1 und der Form 2 erfolgt während der Bearbeitung eine Relativbewegung in Lateralrichtung, also in Axialrichtung der Form 2, so daß bei gleichzeitiger Drehung der Form 2 um sich selbst nach und nach die Oberfläche 20 der Form 2 bearbeitet werden kann.

Die Lasergravureinrichtung 1 umfaßt einen Laser 10, beispielsweise ein Festkörper- oder Gaslaser, wie Stab-, Faser-, Disk-, Slab- oder Diodenlaser. Der von dem Laser 10 erzeugte Laserstrahl wird einem dem Laser 10 nachgeschalteten akusto-optischen Modulator 11 zugeführt. In den Modulator 11 wird gleichzeitig eine Modulationsfrequenz F1 eingespeist, die beispielsweise von einem Hochfrequenz-Signalgenerator erzeugt wird und die beispielsweise in einem Frequenzbereich zwischen etwa 50 und 100 MHz liegt und amplitudenmoduliert ist. Dieser akusto-optische Modulator 11 sorgt in bekannter Weise für eine von der eingespeisten Modulationsfrequenz F1 abhängige Ablenkung des Laserstrahls und damit für eine Aufspaltung in zwei Laserstrahlwege L0 und L1.

Infolge der im Modulator 11 bewirkten Ablenkung laufen die beiden Laserstrahlwege L0, L1 unter einem bestimmten Winkel auseinander, werden also räumlich getrennt. In einem ausreichenden Abstand vom Modulator 11 ist ein Absorber 12 so angeordnet, daß der erste Laserstrahlweg L0 in den Absorber 12 läuft, während der zweite Laserstrahlweg L1 am Absorber 12 vorbeiführt. Im Absorber 12 wird der auftreffende, den Laserstrahlweg L0 nehmende Laserstrahl absorbiert, d.h. in Wärme umgewandelt und abgeführt. Hierzu ist der Absorber 12 beispielsweise als wassergekühlter Körper ausgeführt, um die anfallende Wärmeenergie abführen zu können.

Der andere Laserstrahlweg L1 führt am Absorber 12 vorbei durch eine Anpassungsoptik 13 und eine Fokussieroptik 14 zu einem Fokuspunkt FP1 auf der Oberfläche 20 der zu gravierenden Druck- oder Prägeform 2.

Die in der Zeichnung weiterhin dargestellten, hier insgesamt drei Umlenkspiegel 15 dienen lediglich dazu, der Lasergravureinrichtung 1 eine kompakte Bauweise zu verleihen, so daß sie problemlos z.B. im Maschinenbett einer Lasergravureinrichtung untergebracht werden kann.

Figur 2 der Zeichnung zeigt eine zweite Lasergravureinrichtung 1 nach dem Stand der Technik. Grundsätzlich ist die Lasergravureinrichtung 1 in Figur 2 weitgehend mit der Lasergravureinrichtung 1 gemäß Figur 1 übereinstimmend aufgebaut; der Unterschied besteht hier darin, daß bei der Einrichtung 1 gemäß Figur 2 dem akusto-optischen Modulator 11 gleichzeitig zwei unterschiedliche Modulationsfrequenzen F1 und F2 zugeführt werden, die von einem gemeinsamen oder von zwei getrennten Frequenzgeneratoren, die nicht eigens dargestellt sind, erzeugt werden. Hierdurch wird der vom Laser 10 kommende Laserstrahl im Modulator 11 nunmehr auf insgesamt drei Laserstrahlwege L0, L1 und L2 aufgeteilt, die jeweils durch einen unterschiedlichen Ablenkwinkel erzeugt werden.

Wie zuvor schon beschrieben, führt der Laserstrahlweg L0 in den Absorber 12; die beiden weiteren Laserstrahlwege L1 und L2 führen am Absorber 12 vorbei durch dieselbe Anpassungsoptik 13 und dieselbe Fokussieroptik 14 zur Oberfläche 20 der Druck- oder Prägeform 2. Dabei endet jeder Laserstrahlweg L1, L2 auf der Oberfläche 20 der Form 2 in je einen eigenen Fokuspunkt FP1, FP2.

Diese beiden Fokuspunkte FP1, FP2 haben einen lateralen Abstand v voneinander. Zweckmäßig wird dieser Abstand v durch Wahl eines entsprechenden Frequenzunterschiedes der beiden Modulationsfrequenzen so eingestellt, daß er dem Gravurvorschub bei Verwendung einer Gravureinrichtung mit nur einem einzigen Fokuspunkt entspricht.

Bei der Lasergravureinrichtung 1 gemäß Figur 2 werden im Unterschied zur Lasergravureinrichtung 1 gemäß Figur 1 also gleichzeitig zwei unmittelbar benachbarte parallele Spuren der Druck- oder Prägeform 2 bearbeitet. Dies ergibt eine Verdoppelung der Bearbeitungsgeschwindigkeit, ohne daß die Drehzahl der Rotation der Druck- oder Prägeform 2 erhöht werden muß.

Die beiden Modulationsfrequenzen F1, F2 können jeweils für sich moduliert werden, so daß die beiden über die Laserstrahlwege L1, L2 laufenden Laserstrahlen auch eine separate Intensitätssteuerung erhalten. Die Modulation erfolgt nach Maßgabe gespeicherter Gravurdaten, wie dies bekannt ist, wobei hier aber nicht mehr die Gravurdaten für alle Spuren einzeln nacheinander abgerufen und für die Modulation einer einzigen Modulationsfrequenz zur Verfügung gestellt werden, sondern jeweils die Gravurdaten für zwei parallele Spuren gleichzeitig parallel abgerufen und für die Modulation der zwei Modulationsfrequenzen zur Verfügung gestellt und den Modulationseingängen des Frequenzgenerators oder der Frequenzgeneratoren zugeführt werden.

Der laterale Abstand v der beiden Fokuspunkte FP1, FP2 kann durch Variation des Frequenzunterschiedes der ersten Modulationsfrequenz F1 und der zweiten Modulationsfrequenz F2 eingestellt werden, da der Ablenkwinkel, der im Modulator 11 erzeugt wird, frequenzabhängig ist. Damit läßt sich der Abstand v genau auf den jeweiligen Gravurvorschub von Spur zu Spur passend einstellen, so daß die Gravureinrichtung problemlos an unterschiedliche Gravurauflösungen, die unterschiedliche Spurabstände haben, anpaßbar ist.

Über die in Figur 2 dargestellt Einspeisung von zwei verschiedenen Modulationsfrequenzen F1, F2 hinaus können in den Modulator 11 auch mehr als zwei Modulationsfrequenzen eingespeist werden, wodurch eine noch weitere Aufteilung des vom Laser 10 kommenden Laserstrahls in noch mehr Laserstrahlwege erfolgt. So läßt sich eine Vermehrung der Laserstrahlwege erzielen, was zu einer entsprechenden weiteren Verkürzung des Zeitaufwandes für eine vorgegebene Gravur einer Druck- oder Prägeform führt.

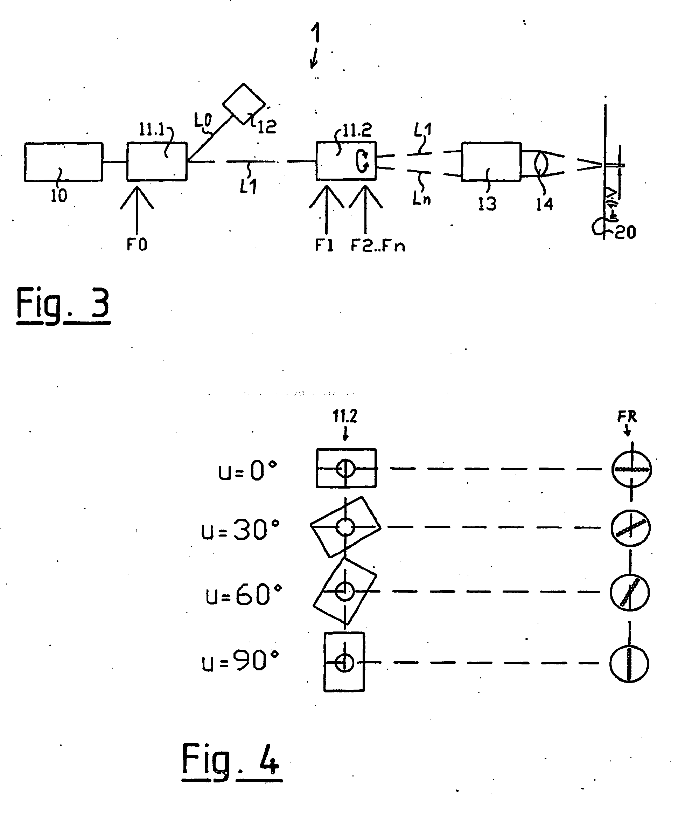

Figur 3 zeigt eine dritte Lasergravureinrichtung 1, mit der auf der Oberfläche 20 der zu gravierenden Form mehrere Fokuspunkte in Form einer Fokusreihe FR erzeugbar sind.

Mittels des Lasers 10 wird auch hier zunächst ein einzelner Laserstrahl erzeugt. Dieser Laserstrahl wird in den Modulator 11.1 eingeleitet, in den gleichzeitig eine Grund-Modulationsfrequenz F0 eingespeist wird. Den Modulator 11.1 verlassen zwei Laserstrahlwege L0 und L1. Der Laserstrahlweg L0 führt in den Absorber 12. Der Laserstrahlweg L1 führt zu einem zweiten akusto-optischen Modulator 11.2, in den mindestens eine Modulationsfrequenz F1, vorzugsweise aber mehrere Modulationsfrequenzen F1, F2 bis Fn eingespeist werden. Bei Einspeisung nur einer Modulationsfrequenz F1 ergibt sich eine Aufteilung des Laserstrahlweges hinter dem hier als Deflektor wirkenden Modulator 11.2 in zwei Laserstrahlwege; jede zusätzlich eingespeiste Modulationsfrequenz F2 bis Fn ergibt je einen zusätzlichen Laserstrahlweg.

Die Laserstrahlwege L1 bis Ln laufen durch eine gemeinsame Anpassungsoptik 13 und Fokussieroptik 14 und treffen anschließend in je einem Fokuspunkt, die zusammen eine Fokusreihe FR bilden, auf die Oberfläche 20 der zu gravierenden Form. Sofern die in den als Deflektor wirkenden zweiten Modulator 11.2 eingespeisten Frequenzen F1 bis Fn untereinander jeweils einen gleichen Frequenzabstand aufweisen, ergibt sich zwischen den Fokuspunkten der Fokusreihe FR auf der Oberfläche 20 ein jeweils gleichmäßiger Abstand v. Die Fokusreihe insgesamt hat dann eine Länge (n - 1) * v.

Wie an dem zweiten Modulator 11.2 durch einen Drehpfeil angedeutet ist, kann dieser Modulator 11.2 um seine Längsmittelachse, die mit der Achse des einfallenden Laserstrahls L1 zusammenfällt, verdreht werden. Diese Verdrehung hat eine Verdrehung der Laserstrahlwege L1 bis Ln und damit auch der Fokusreihe FR zur Folge.

Verschiedene Verdrehungszustände des zweiten Modulators 11.2 und der dadurch hervorgerufenen Verdrehungen der Fokusreihe FR sind in Figur 4 dargestellt.

In der oberen Reihe der Darstellungen in der Figur 4 beträgt der Verdrehungswinkel u = 0°, wodurch eine Fokusreihe FR erhalten wird, die in Lateralrichtung oder Axialrichtung der Oberfläche 20 der zu gravierenden Form verläuft.

In der zweiten Reihe der Darstellungen der Figur 4 beträgt der Verdrehungswinkel u = 30°; dies hat eine entsprechende Verdrehung um ebenfalls 30° der Fokusreihe FR relativ zur Lateralrichtung zur Folge.

In den beiden nach unten hin folgenden Reihen der Darstellungen in Figur 4 sind die Positionen des zweiten Modulators 11.2 und der Fokusreihe FR für die Verdrehungswinkel u = 60° und u = 90° dargestellt.

Für die Erzielung der verdrehten Lage der Fokusreihe FR ist es lediglich erforderlich, den zweiten Modulator 11.2 um seine Längsmittelachse zu verdrehen. Der Laser 10, der erste Modulator 11.1 und der Absorber 12 können ihre Lage beibehalten.

Bei der hier beschriebenen Ausführung der Gravureinrichtung 1 dient der erste akusto-optische Modulator 11.1 lediglich als optischer Schalter, der die Leistung des geradlinig durchlaufenden Laserstrahlweges L1 moduliert. Der zweite, als Deflektor dienende akusto-optische Modulator 11.2 dient dagegen nur zur Aufteilung in die mehreren Laserstrahlwege L1 bis Ln.

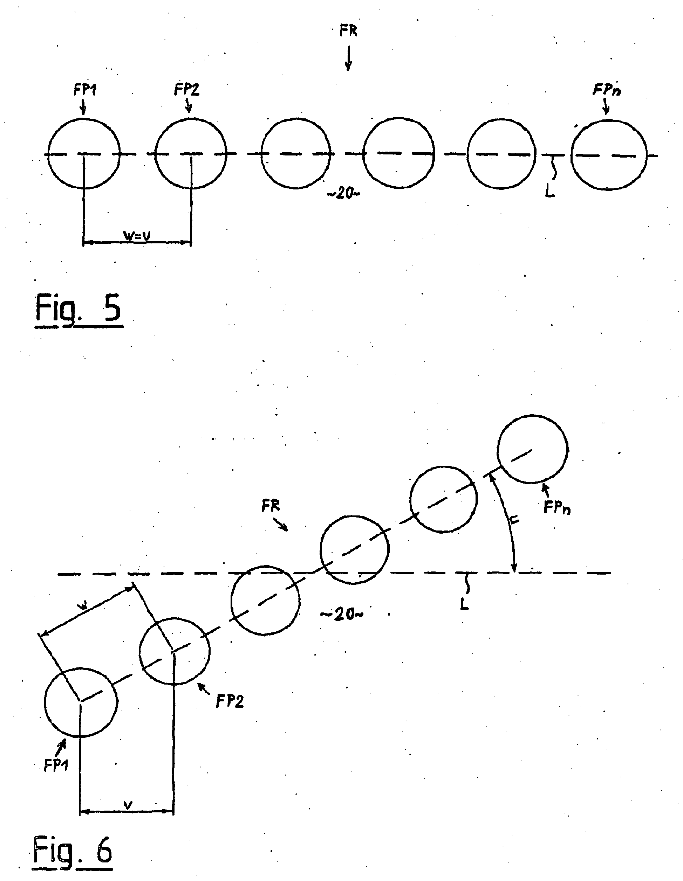

Figur 5 zeigt die Fokusreihe FR, die in Figur 4 rechts ganz oben gezeichnet ist, in einer vergrößerten Darstellung. Figur 5 verdeutlicht, daß hier die Fokusreihe FR aus insgesamt sechs Fokuspunkten FP1, FP2 bis FPn (mit n = 6) besteht, die nebeneinander auf der Oberfläche 20 der zu gravierenden Form liegen. Dabei verlaufen die Fokuspunkte FP1, FP2 bis FPn der Fokusreihe FR in Lateralrichtung L der Oberfläche 20. Der in Lateralrichtung L gemessene Abstand v zwischen zwei Fokuspunkten FP1, FP2 sowie deren absoluter Abstand w stimmen bei dieser Lage der Fokusreihe FR überein.

Figur 6 zeigt in vergrößerter Darstellung die in Figur 4 in der zweiten Reihe von oben gezeigte Fokusreihe FR, die um einen Winkel U = 30° gegen den Uhrzeigersinn aus der Lateralrichtung L verdreht ist. Der absolute Abstand w zwischen zwei benachbarten Fokuspunkten FP1, FP2 ist bei der Verdrehung unverändert geblieben; geändert hat sich aber in Abhängigkeit von dem Winkel u der lateral gemessene Abstand v zwischen zwei Fokuspunkten FP1, FP2.

Zwischen den beiden Abständen v und w besteht dabei ein geometrischer Zusammenhang gemäß der Formel v = w * cos u. Ein aufgrund eines vorgegebenen Rasterabstandes der Gravur gewünschter lateraler Abstand v zwischen zwei benachbarten Fokuspunkten FP1, FP2 kann also durch Einstellung eines passenden Winkels u in gewünschter Weise erzielt werden.

Die Auswanderung der Fokuspunkte FP1, FP2 usw. nach oben und unten, also in Umfangsrichtung der Oberfläche 20 der zu gravierenden Form 2, kann durch entsprechende Korrekturen in den Steuerprogrammen für die Steuerung der Einrichtung 1 korrigiert werden.

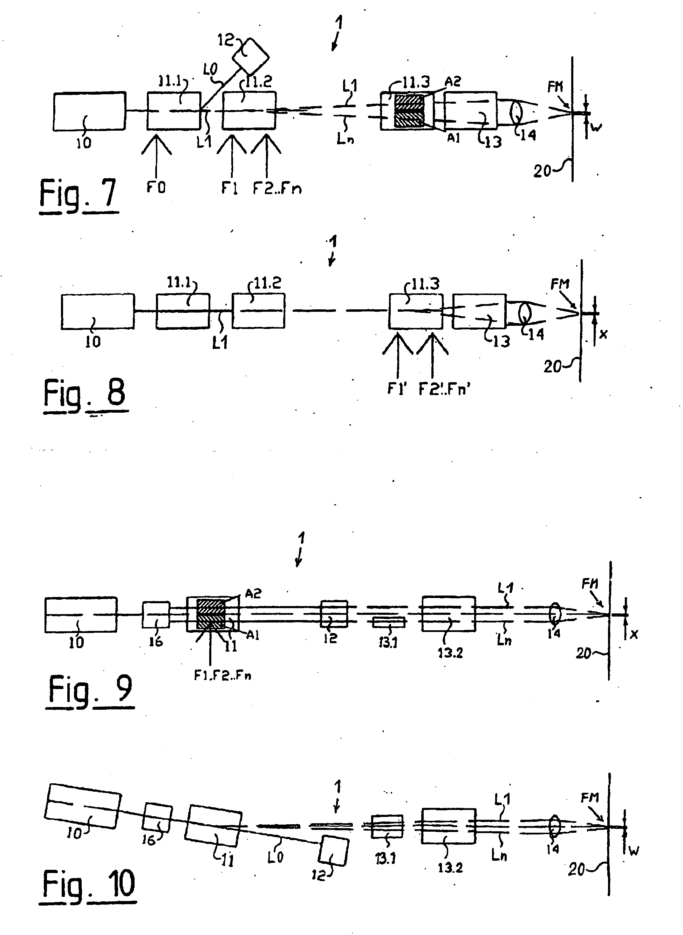

Figur 7 und Figur 8 der Zeichnung zeigen in einer schematischen Draufsicht und Seitenansicht eine Gravureinrichtung 1 die nach dem erfindungsgemäßen Verfahren betreibbar ist. Bei dieser Gravureinrichtung 1 ist wesentlich, daß sie nicht eine eindimensionale Fokusreihe, sondern eine zweidimensionale Fokusmatrix FM erzeugt.

Die Gravureinrichtung 1 besitzt hierzu insgesamt drei akusto-optische Modulatoren 11.1, 11.2 und 11.3. Zur Erzeugung eines Ausgangs-Laserstrahls dient hier wieder ein Laser 10. Der von diesem erzeugte Laserstrahl gelangt zunächst in den ersten akusto-optischen Modulator 11.1, in den gleichzeitig eine Grund-Modulationsfrequenz F0 eingespeist wird. Dieser Modulator 11.2 sorgt in bekannter Weise für eine Aufteilung in zwei Laserstrahlwege L0 und L1, wovon der Weg L0 in den Absorber 12 und der Weg L1 in den zweiten Modulator 11.2 führt.

In den zweiten Modulator 11.2 wird mindestens eine weitere Modulationsfrequenz F1, im vorliegenden Beispiel mehrere Modulationsfrequenzen F1, F2 bis Fn, eingespeist, die für eine Aufspaltung in entsprechend viele Laserstrahlwege L1 bis Ln sorgen. Die so erzeugten, den ersten Modulator 11.2 verlassenden Laserstrahlwege L1 bis Ln laufen in den dritten Modulator 11.3.

Dieser dritte akusto-optische Modulator 11.3 ist so ausgeführt, daß er zwei voneinander getrennte Modulationsfelder A1 und A2 aufweist. Außerdem ist der dritte Modulator 11.3 hinsichtlich seiner Kristallausrichtung gegenüber dem zweiten Modulator 11.2 um seine Längsmittelachse im vorliegenden Beispiel um 90° verdreht. Damit wird erreicht, daß der dritte Modulator 11.3 eine Aufteilung der Laserstrahlwege L1 bis Ln in einer Ebene vornimmt, die hier senkrecht zur Aufteilungsebene des zweiten Modulators 11.2 liegt.

Auf diese Weise ergeben sich am Ausgang des dritten Modulators 11.3 Laserstahlwege L1 bis Ln, die in zwei Dimensionen parallel zueinander verlaufen. Als Minimum ergeben sich hier bei Aufteilung der Laserstrahlwege in jedem Modulator 11.2, 11.3 auf je zwei ausgehende Laserstrahlwege insgesamt vier Laserstrahlwege, die in Form eines Rechtecks oder Quadrats zueinander angeordnet sind.

Alle Laserstrahlwege L1 bis Ln verlaufen hinter dem dritten Modulator 11.3 durch eine gemeinsame Anpassungsoptik 13 und eine gemeinsame Fokussieroptik 14 und enden in der Fokusmatrix FM auf der Oberfläche 20 der zu gravierenden Form. Bei der Betrachtungsrichtung gemäß Figur 7 haben die Fokuspunkte innerhalb der Fokusmatrix FM einen Abstand w voneinander.

Figur 8 zeigt die Gravureinrichtung 1 aus Figur 7 in der Seitenansicht, in der die Aufteilung der Laserstrahlwege durch den dritten Modulator 11.3 deutlich wird.

Die Figuren 7 und 8 zeigen weiterhin, daß dem zweiten Modulator 11.2 Modulationsfrequenzen F1, F2 bis Fn zugeführt werden. Dem dritten Modulator 11.3 werden Modulationsfrequenzen F1', F2' bis Fn' zugeführt. Diese Modulationsfrequenzen F1, F1'; F2, F2' usw. können jeweils gleich oder auch unterschiedlich sein, je nach gewünschtem Ablenkungswinkel und je nach gewünschtem Abstand zwischen den einzelnen Fokuspunkten in Lateralrichtung und in Umfangsrichtung der Oberfläche 20 der zu gravierenden Form.

Die Zahl der hier erzeugten Fokuspunkte innerhalb der Fokusmatrix sowie deren Verteilung in Lateral- und Umfangsrichtung richten sich nach der Anzahl der verschiedenen in die Modulatoren 11.2 und 11.3 eingespeisten Modulationsfrequenzen.

Die Figuren 9 und 10 zeigen eine zweite Gravureinrichtung 1 die nach dem erfindungsgemäßen Verfahren betreibbar ist, wobei Figur 9 eine Seitenansicht und Figur 10 eine Draufsicht ist.

Auch hier wird zunächst in einem einzelnen Laser 10 ein Laserstrahl erzeugt, der hier zunächst in einen nachgeschalteten Strahlteiler 16 läuft, wo der Laserstrahl in zwei parallele Laserstrahlen aufgeteilt wird. Anschließend treten die beiden im Strahlteiler 16 erzeugten Laserstrahlen parallel zueinander in den akusto-optischen Modulator 11 ein.

Dieser Modulator 11 entspricht in seiner Ausführung dem dritten akusto-optischen Modulator 11.3 der Gravureinrichtung 1 gemäß den Figuren 7 und 8. Der Modulator 11 gemäß Figur 9 und 10 hat also ebenfalls zwei separate akusto-optische Schallfelder oder Bereiche A1 und A2, die in der Seitenansicht gemäß Figur 9 übereinander angeordnet sind. Je ein Laserstrahl läuft dabei durch das erste Schallfeld A1 und durch das zweite Schallfeld A2. In dem Modulator 11 werden die beiden einlaufenden Laserstrahlen senkrecht zur Zeichnungsebene in mehrere Laserstrahlwege aufgeteilt, entsprechend der Anzahl der in den Modulator 11 eingespeisten Modulationsfrequenzen F1, F2 bis Fn.

Ein Laserstrahlweg L0 führt auch hier wieder in den Absorber 12. Die weiteren hier erzeugten Laserstrahlwege L1 bis Ln laufen an dem Absorber 12 vorbei.

Die vom ersten, in Figur 9 unteren Schallfeld A1 des Modulators 11 kommende Gruppe von Laserstrahlwegen durchläuft dann eine Gruppen-Anpassungsoptik 13.1, während die vom zweiten Schallfeld A2 kommende Gruppe von Laserstrahlwegen an dieser Gruppen-Anpassungsoptik vorbeiläuft. Anschließen laufen alle Laserstrahlwege noch durch eine gemeinsame Anpassungsoptik 13.2 und eine gemeinsame Fokussieroptik 14 zur Oberfläche 20 der zu gravierenden Form. Dort enden die Laserstrahlwege L1 bis Ln wieder in einer Fokusmatrix FM, die aus mehreren Fokuspunkten besteht, die eine zweidimensionale Anordnung bilden.

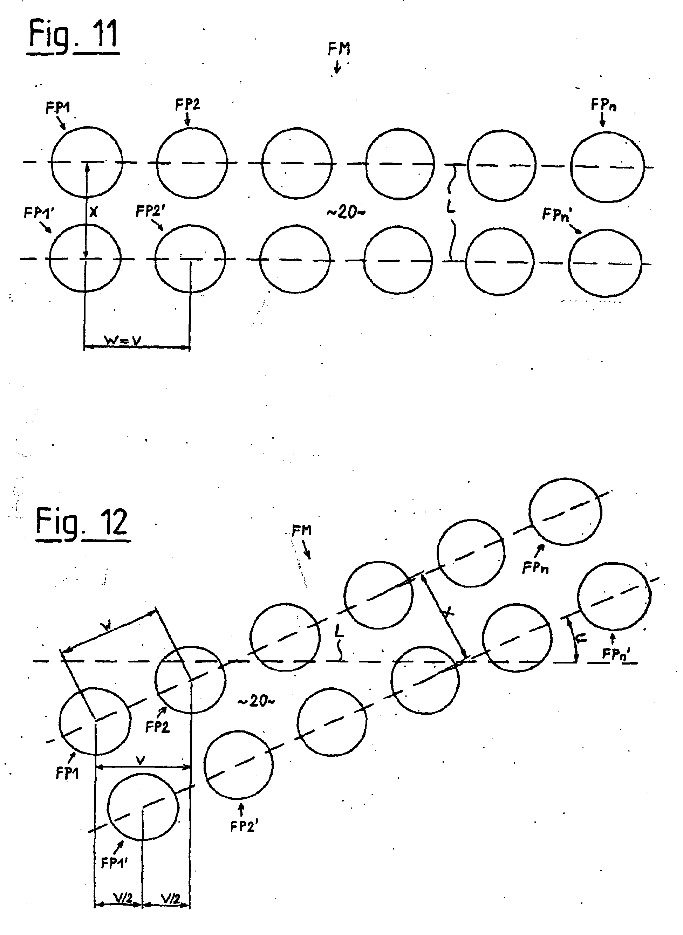

Ein Beispiel für eine zweidimensionale Fokusmatrix FM ist in vergrößerter Darstellung in Figur 11 und in Figur 12 gezeigt, wobei eine derartige Fokusmatrix FM mit einer Gravureinrichtung 1 gemäß den Figuren 7 und 8 oder gemäß den Figuren 9 und 10 erzeugt werden kann. Die gezeigte Matrix FM besteht dabei aus zwei Reihen zu je sechs Fokuspunkten FP1, FP2 bis FPn und FP1', FP2' bis FPn' (mit n=6).

Figur 11 zeigt die Fokusmatrix in einer Ausrichtung der beiden Reihen der Fokuspunkte FP1, FP2 bis FPn sowie FP1', FP2' bis FPn' parallel zur Lateralrichtung L der Oberfläche 20 der zu gravierenden Form. Die Fokuspunkte FP1 bis FPn' bilden dabei eine rechteckige Anordnung aus insgesamt zwölf Fokuspunkten; andere Zahlen und Anordnungen von Fokuspunkten sind selbstverständlich möglich.

Bei der in Figur 11 gezeigten lateralen Ausrichtung der beiden Reihen von Fokuspunkten FP1 bis FPn und FP1' bis FPn' ist jeweils der laterale Abstand v gleich dem absoluten Abstand w innerhalb einer Reihe.

Der senkrecht dazu in Umfangsrichtung der Oberfläche 20 der zu gravierenden Form gemessene Abstand x zwischen zwei benachbarten Fokuspunkten FP1 und FP1' stimmt hier annährend mit dem lateralen Abstand v überein; hier sind aber auch Unterschiede durch entsprechende Variation der Modulationsfrequenzen gezielt einstellbar.

Figur 12 schließlich zeigt die Fokusmatrix FM aus Figur 11 in einer gegenüber der Lateralrichtung L um den Winkel u verdrehten Lage. Diese verdrehte Lage der Fokusmatrix FM ist beispielsweise erzeugbar durch eine synchrone Verdrehung des zweiten und dritten Modulators 11.2, 11.3 bei der Gravureinrichtung 1 gemäß Figur 7 und 8 oder durch eine synchrone Verdrehung der gesamten Gravureinrichtung 1 gemäß den Figuren 9 und 10. Alternativ kann für die Verdrehung auch die Anpassungsoptik 13 oder eine speziell für die Verdrehung vorgesehene zusätzliche, in den Zeichnungen nicht dargestellte weitere Anpassungsoptik eingesetzt werden.

Die Verdrehung der Fokusmatrix FM um den Winkel u, im vorliegenden Beispiel um etwa 30°, führt dazu, daß sich innerhalb jeder Reihe von Fokuspunkten FP1 bis FPn und FP1' bis FPn' der laterale Abstand v vermindert, wie schon weiter oben anhand einer einzelnen Fokusreihe erläutert. Bei der Fokusmatrix kann also der laterale Abstand v zwischen zwei benachbarten Fokuspunkten nach Wunsch eingestellt werden, indem ein passender Winkel u für die Verdrehung gewählt wird. Im Beispiel ist der Drehwinkel u gerade so gewählt, daß der laterale Abstand zwischen zwei benachbarten Fokuspunkten FP1, FP1'; FP1', FP2 usw. zweier verschiedener Reihen genau der Hälfte des lateralen Abstands v zwischen zwei benachbarten Fokuspunkten FP1, FP2; FP1', FP2' usw. innerhalb einer Reihe entspricht.

Wie aus der vorstehenden Erläuterung von Ausführungsbeispielen der erfindungsgemäßen Gravureinrichtungen 1 und der Verfahren zum Betreiben der Gravureinrichtungen 1 deutlich geworden ist, kann die Gravurgeschwindigkeit bei der Gravur der Oberfläche 20 einer zu gravierenden Form 2 erheblich gesteigert werden. Im Vergleich zur Gravur mit einer eindimensionalen Fokusreihe mit n Fokuspunkten ergibt eine zweidimensionale Fokusmatrix mit 2 * n Fokuspunkten schon eine Halbierung der Gravurzeit; bei Verwendung von noch mehr Fokuspunkten läßt sich die Gravurzeit auf noch kleinere Bruchteile der ursprünglichen Gravurzeit reduzieren.

Die Modulatoren sind in der Lage, bei Einspeisung mehrerer Modulationsfrequenzen eine Aufteilung in mehr als zwei Laserstrahlwege vorzunehmen. Allerdings stößt die Leistungsfähigkeit der Modulatoren bei einer bestimmten, von den eingespeisten Modulationsfrequenzen und von der zu verarbeitenden Laserleistung abhängigen Belastung an eine Grenze. Um Überlastungen insbesondere der Modulatoren zu vermeiden, ist eine sequentielle Ansteuerung der einzelnen, durch je eine eingespeiste Modulationsfrequenz definierten Kanäle mit einer wesentlich höheren Frequenz als der eigentlichen Modulationsfrequenz möglich. Damit würden dann bei mehreren Laserstrahlwegen und Fokuspunkten nicht alle Laserstrahlwege gleichzeitig von Laserstrahlen belegt werden, sondern zeitlich aufeinanderfolgend immer nur ein Teil der zur Verfügung stehenden Laserstrahlwege tatsächlich von einem Laserstrahlweg belegt.

## Patentansprüche

1. Verfahren zum Betreiben einer Lasergravureinrichtung (1) für die Gravur von Druck- oder Prägeformen (2), mit einem Laser (10), mit einem eine erste Modulationsfrequenz (F1) erzeugenden Frequenzgenerator und mit einem dem Laser (10) nachgeordneten, mit der ersten Modulationsfrequenz (F1) speisbaren akusto-optischen Modulator (11) zur frequenzabhängigen Laserstrahlablenkung und -aufteilung, wobei von dem Modulator (11) aus ein Laserstrahlweg (L0 in einen Absorber (12) führt und ein zweiter Laserstrahlweg (L1) durch eine den Laserstrahl formende Anpassungsoptik (13) und durch eine den Laserstrahl fokussierende Fokussieroptik (14) zu einem Fokuspunkt (FP1) auf der Oberfläche (20) der zu gravierenden Druck- oder Prägeform (2) führt, wobei mindestens eine sich von der ersten Modulationsfrequenz (F1) unterscheidende weitere Modulationsfrequenz (F2) erzeugt und dem akustöoptischen Modulator (11) neben der ersten Modulationsfrequenz (F1) gleichzeitig zugeführt wird, wodurch der Laserstrahl im akusto-optischen Modulator (11) neben einer ersten Ablenkung mindestens eine sich winkelmäßig von der ersten unterscheidende weitere Ablenkung und **dadurch** eine weitere Aufteilung erfährt und wobei so mindestens ein weiterer Laserstrahlweg (L2) gebildet wird, der zu mindestens einem weiteren Fokuspunkt (FP2) ebenfalls auf der Oberfläche (20) der Druck- oder Prägeform (2) führt, wobei wenigstens zwei in einer ersten Ebene liegende parallele Laserstrahlen erzeugt und parallel in den akusto-optischen Modulator (11) eingeleitet werden und wobei der akusto-optischen Modulator (11) so ausgerichtet wird, daß in ihm jeder eintretende Laserstrahl in jeweils wenigstens zwei in einer zur ersten Ebene verdrehten zweiten Ebene liegende Laserstrahlen aufgeteilt wird, wodurch mindestens vier Laserstrahlwege (L1, L2, ..., Ln) gebildet werden, die zu mindestens vier, eine zweidimensionale Fokusmatrix (FM) bildenden Fokuspunkten (FP1, FP2, ..., FPn; FP1' FP2', .., FPn') auf der Oberfläche (20) der Druck- oder Prägeform (2) führen,
**dadurch gekennzeichnet,**
**daß** nur der Modulator (11) um seine Längsmittelachse um einen vorgebbaren Winkel (u) verdreht wird, wodurch die Anordnung der austretenden Laserstrahlwege (L1, L2, ..., Ln) und eine durch deren Fokuspunkte (FP1, FP2, ..., FPn; FP1', FP2', ..., FPn') auf der Oberfläche (20) der zu gravierenden Druck- oder Prägeform (2) gebildete Fokusmatrix (FM) eine entsprechende Verdrehung um diesen Winkel (u) erfährt.

2. Verfahren nach Anspruch 1, **dadurch gekennzeichnet, daß** die zur ersten Ebene verdrehte zweite Ebene zur ersten Ebene senkrecht ist.

3. Verfahren nach Anspruch 1 oder 2, **dadurch gekennzeichnet, daß** die Modulationsfrequenzen (F1, F2, ..., Fn) variabel sind und jeweils auf eine gewünschte Frequenz eingestellt werden.

4. Verfahren nach Anspruch 3, **dadurch gekennzeichnet, daß** als weitere Modulationsfrequenz(en) (F2, ..., Fn) jeweils eine Frequenz erzeugt und dem akusto-optischen Modulator (11) zugeführt wird, die sich so von der ersten Modulationsfrequenz (F1) unterscheidet, daß die erzeugten Fokuspunkte (FP1, FP2,..., FPn) relativ zueinander einen lateralen Abstand (v) einnehmen, der einem Gravurvorschub bei einem einzelnen Fokuspunkt entspricht.

5. Verfahren nach Anspruch 1 der 2, **dadurch gekennzeichnet, daß** jede weitere Modulationsfrequenz (F2, ..., Fn) einen festen Frequenzabstand von der ersten Modulationsfrequenz (F1) aufweist.

6. Verfahren nach Anspruch 5, **dadurch gekennzeichnet, daß** die Frequenzabstände zwischen je zwei benachbarten Modulationsfrequenzen (F1, F2, ..., Fn) gleich sind.

7. Verfahren zum Betreiben einer Lasergravureinrichtung (1) für die Gravur von Druck- oder Prägeformen (2), mit einem Laser (10), mit einem eine erste Modulationsfrequenz (F1) erzeugenden Frequenzgenerator und mit einem dem Laser (10) nachgeordneten, mit der ersten Modulationsfrequenz (F1) speisbaren akusto-optischen Modulator (11) zur frequenzabhängigen Laserstrahlablenkung und -aufteilung, wobei von dem Modulator (11) aus ein Laserstrahlweg (L0) in einen Absorber (12) führt und ein zweiter Laserstrahlweg (L1) durch eine den Laserstrahl formende Anpassungsoptik (13) und durch eine den Laserstrahl fokussierende Fokussieroptik (14) zu einem Fokuspunkt (FP1) auf der Oberfläche (20) der zu gravierenden Druck- oder Prägeform (2) führt, wobei mindestens eine sich von der ersten Modulationsfrequenz (F1) unterscheidende weitere Modulationsfrequenz (F2) erzeugt und dem akusto-optischen Modulator (11) neben der ersten Modulationsfrequenz (F1) gleichzeitig zugeführt wird, wodurch der Laserstrahl im akusto-optischen Modulator (11) neben einer ersten Ablenkung mindestens eine sich winkelmäßig von der ersten unterscheidende weitere Ablenkung und dadurch eine weitere Aufteilung erfährt und wobei so mindestens ein weiterer Laserstrahlweg (L2) gebildet wird, der zu mindestens einem weiteren Fokuspunkt (FP2) ebenfalls auf der Oberfläche (20) der Druck- oder Prägeform (2) führt,
wobei entweder ein Laser (10) konstanter Leistung mit einem nachgeschalteten ersten akusto-optischen Modulator (11.1) als Leistungsmodulator für die Modulation der Laserstrahlleistung oder ein ausreichend schnell schaltbarer Laser (10) unter Entfall des Absorbers (12) eingesetzt wird,
wobei ein nachgeschalteter, auf den ersten Modulator (11.1) oder den schaltbaren Laser (10) synchron abgestimmter (zweiter) akusto-optischer Modulator (11.2) als Deflektor zur Aufteilung des leistungsmodulierten Laserstrahls auf die wenigstens zwei weiteren Laserstrahlwege (L1, L2, ..., Ln) eingesetzt wird, wobei dem ersten Modulator (11.1) oder dem schaltbaren Laser (10) nur eine Grund-Modulationsfrequenz (F0) zugeführt wird und wobei dem als Deflektor dienenden (zweiten) Modulator (11.2) wenigstens die erste Modulationsfrequenz (F1) oder die erste und weitere Modulationsfrequenzen (F1, F2, ......Fn) zugeführt werden,
**dadurch gekennzeichnet,**
**daß** dem als Deflektor dienenden (zweiten) Modulator (11.2) ein weiterer, als zweiter Deflektor dienender akusto-optischer Modulator (11.3) mit einer relativ zum ersten Deflektor um seine Längsmittelachse verdrehten Ausrichtung nachgeschaltet ist, wobei dem als zweiter Deflektor dienenden Modulator (11.3) wenigstens eine erste Modulationsfrequenz (F1') oder die erste und weitere Modulationsfrequenzen (F1', F2', ..., Fn') zugeführt werden, wodurch mindestens vier Laserstrahlwege (L1, L2, ..., Ln) gebildet werden, die zu mindestens vier eine zweidimensionale Fokusmatrix (FM) bildenden Fokuspunkten (FP1, FP2, ..., FPn; FP1', FP2', ..., FPn') auf der Oberfläche (20) der Druck- oder Prägeform (2) führen.

8. Verfahren nach Anspruch 7, **dadurch gekennzeichnet, daß** der als zweiter Deflektor dienende akusto-optische Modulator (11.3), der eine relativ zum ersten Deflektor um seine Längsmittelachse verdrehte Ausrichtung aufweist, um 90° verdreht ist.

9. Verfahren nach Anspruch 7 oder 8, **dadurch gekennzeichnet, daß** der als Deflektor eingesetzte (zweite) Modulator (11.2) oder die beiden als Deflektoren eingesetzten Modulatoren (11.2, 11.3) um seine/ihre Längsmittelachse um einen vorgebbaren Winkel (u) verdreht wird/werden, wodurch die Anordnung der austretenden Laserstrahlwege (L1, L2,...., Ln) und eine durch deren Fokuspunkte (FP1, FP2, ..., FPn; FP1', FP2', ..., FPn') auf der Oberfläche (20) der zu gravierenden Druck- oder Prägeform (2) gebildete Fokusmatrix (FM) eine entsprechende Verdrehung um diesen Winkel (u) erfährt.

10. Verfahren nach Anspruch 9, **dadurch gekennzeichnet, daß** anstelle des Modulators (11) oder des als Deflektor eingesetzten zweiten Modulators (11.2) oder der beiden als Deflektoren eingesetzten Modulatoren (11.2, 11.3) die vorhandene Anpassungsoptik (13) oder eine zusätzliche Anpassungsoptik für die Verdrehung der Anordnung der Laserstrahlwege (L1, L2, ..., Ln) und der Fokusmatrix (FM) eingesetzt wird.

11. Verfahren nach einem der vorhergehenden Ansprüche, **dadurch gekennzeichnet, daß** als Modulator (11, 11.3) ein Modulatorkristall mit wenigstens zwei parallelen akusto-optischen Feldern (A1..A2, ..., An) eingesetzt wird, wobei je einer der wenigstens zwei eintretenden Laserstrahlen in je eines der Felder (A1, A2, ..., An) eingeleitet wird und wobei jedes akusto-optische Feld (A1, A2, ..., An) über einen gemeinsamen oder je einen eigenen Frequenzgenerator mit je zwei oder mehr Modulationsfrequenzen (F1, F2, .., Fn; F1', F2', ..., Fn') gespeist wird.

12. Verfahren nach einem der Ansprüche 7-10, **dadurch gekennzeichnet, daß** die wenigstens zwei in den Modulator (11) eintretenden Laserstrahlen durch einen Laser (10) mit mindestens einem nachgeschalteten Strahlteiler (16) oder durch wenigstens zwei Laser (10) erzeugt werden.

13. Verfahren nach Anspruch 12, **dadurch gekennzeichnet, daß** der/die Strahlteiler (16) und der Modulator (11) um die Längsmittelachse des Modulators (11) synchron um einen vorgebbaren Winkel (u) verdreht werden, wodurch die Anordnung der aus dem Modulator (11) austretenden Laserstrahlwege (L1, L2, ..., Ln) und die durch deren Fokuspunkte (FP1, FP2, ..., FPn; FP1', FP2', ... , FPn') auf der Oberfläche (20) der zu gravierenden Druck- oder Prägeform (2) gebildete Fokusmatrix (FM) eine entsprechende Verdrehung um diesen Winkel (u) erfahren.

14. Verfahren nach Anspruch 13, **dadurch gekennzeichnet, daß** anstelle des/der Strahlteiler(s) (16) und des Modulators (11) die vorhandene Anpassungsoptik (13) oder eine zusätzliche Anpassungsoptik für die Verdrehung der Anordnung der Laserstrahlwege (L1, L2, ..., Ln) und der Fokusmatrix (FM) eingesetzt wird.

15. Verfahren nach einem der vorhergehenden Ansprüche, **dadurch gekennzeichnet, daß** die Leistung der über die Laserstrahlwege (L1, L2, ..., Ln) zu den Fokuspunkten (FP1, FP2, ..., FPn; FP1', FP2', ..., FPn') auf der Oberfläche (20) der Druck- oder Prägeform (2) laufenden Laserstrahlen individuell oder in Gruppen gesteuert wird.

16. Verfahren nach einem der vorhergehenden Ansprüche, **dadurch gekennzeichnet, daß** alle zu den Fokuspunkten (FP1, FP2, ..., FPn; FP1' FP2', ..., FPn') auf der Oberfläche (20) der Druck- oder Prägeform (2) laufenden Laserstrahlwege (L1, L2, ..., Ln) durch dieselbe Anpassungsoptik (13) und durch dieselbe Fokussieroptik (14) geführt werden.

17. Verfahren nach einem der Ansprüche 1 bis 16, **dadurch gekennzeichnet, daß** die zu den Fokuspunkten (FP1, FP2, ..., FPn; FP1', FP2', ..., FPn') auf der Oberfläche (20) der Druck- oder Prägeform (2) laufenden Laserstrahlweg (L1, L2,.., Ln) zumindest zum Teil durch je eine individuelle Anpassungsoptik oder zeilen- oder spaltenweise zusammengefaßt durch je eine Gruppen-Anpassungsoptik (13.1, 13.2) geführt werden.

## Claims

1. Method for operating a laser engraving apparatus (1) provided for engraving printing and embossing forms (2) by means of a laser (10), comprising a frequency generator generating a first modulation frequency (F1) and an acousto-optic modulator (11) that is arranged downstream of the laser (10) and can be fed with the first modulation frequency (F1), said acousto-optic modulator (11) being provided for deflecting and splitting the laser beam in relation to the frequency, wherein a laser beam path (L0) extends from the modulator (11) to an absorber (12) and a second laser beam path (L1) extends through an adjusting optics (13) forming the laser beam and through a focusing optics (14) focusing the laser beam to a focus point (FP1) on the surface (20) of the printing or embossing form (2) to be engraved, wherein at least one further modulation frequency (F2) that is different from the first modulation frequency (F2) is generated and supplied to the acousto-optic modulator (11) at the same time as and in addition to the first modulation frequency (F1), whereby the laser beam, in addition to a first deflection, undergoes in the acousto-optic modulator (11) at least one further deflection that is different from the first deflection with regard to its angle and, thus, undergoes further splitting and wherein at least one further laser beam path (L2) is, thus, formed, which extends to at least one further focus point (FP2) that is also located on the surface (20) of the printing or embossing form (2), where at least two parallel laser beams located on a first plane are generated and are passed into the acousto-optic modulator (11) in parallel and that the acousto-optic modulator (11) is aligned such that, therein, each incoming laser beam is split into at least two laser beams that are located on a second plane that is deflected in relation to the first plane, thus forming at least four laser beam paths (L1, L2, ..., Ln) which are extending to at least four focus points (FP1, FP2, ..., FPn; FP1', FP2', ..., FPn') that form a two-dimensional focus matrix (FM) on the surface (20) of the printing or embossing form (2)
**characterized in that**
only the modulator (11) is deflected about its longitudinal central axis by a specifiable angle (u), whereby the arrangement of the passing out laser beam paths (L1, L2, ..., Ln) and a focus matrix (FM), which is formed by their focus points (FP1, FP2, ..., FPn; FP1' , FP2', ...; FPn') on the surface (20) of the printing and embossing form (2) to be engraved, undergo a corresponding deflection by this angle (u) .

2. Method according to Claim 1, **characterized in that** the second plane that is deflected in relation to the first plane is perpendicular to the first plane.

3. Method according to Claim 1 or 2, **characterized in that** the modulation frequencies (F1, F2, ..., Fn) are variable and are each set to a desired frequency.

4. Method according to Claim 3, **characterized in that** a frequency is generated as further modulation frequency or frequencies (F2, ..., Fn) which is/are each supplied to the acousto-optic modulator (11) and is/are different from the first modulation frequency (F1) **in that** the focus points (FP1, FP2, ..., FPn) generated are spaced apart in relation to each other at a lateral distance (v) that is equal to one engraving feed motion when there is only one single focus point.

5. Method according to Claim 1 or 2, **characterized in that** each further modulation frequency (F2, ..., Fn) is spaced apart from the first modulation frequency (F1) at a defined distance.

6. Method according to Claim 5, **characterized in that** any two neighboring modulation frequencies (F1, F2, ..., Fn) are spaced apart from each other at equal distances.

7. Method for operating a laser engraving apparatus (1) provided for engraving printing and embossing forms (2) by means of a laser (10), comprising a frequency generator generating a first modulation frequency (F1) and an acousto-optic modulator (11) that is arranged downstream of the laser (10) and can be fed with the first modulation frequency (F1), said acousto-optic modulator (11) being provided for deflecting and splitting the laser beam in relation to the frequency, wherein a laser beam path (L0) extends from the modulator (11) to an absorber (12) and a second laser beam path (L1) extends through an adjusting optics (13) forming the laser beam and through a focusing optics (14) focusing the laser beam to a focus point (FP1) on the surface (20) of the printing or embossing form (2) to be engraved, wherein at least one further modulation frequency (F2) that is different from the first modulation frequency (F2) is generated and supplied to the acousto-optic modulator (11) at the same time as and in addition to the first modulation frequency (F1), whereby the laser beam, in addition to a first deflection, undergoes in the acousto-optic modulator (11) at least one further deflection that is different from the first deflection with regard to its angle and, thus, undergoes further splitting and wherein at least one further laser beam path (L2) is, thus, formed, which extends to at least one further focus point (FP2) that is also located on the surface (20) of the printing or embossing form (2),
wherein either a laser (10) of constant power with a downstream first acousto-optic modulator (11.1) is used as power modulator for modulating the laser beam power or a laser (10) with adequately fast switching capability is used while the absorber (12) is omitted;
wherein a downstream second acousto-optic modulator (11.2) that is synchronously tuned to the first modulator (11.1) or the switchable laser (10) is used as deflector for splitting the power-modulated laser beam to the at least two further laser beam paths (L1, L2, ..., Ln), wherein the first modulator (11.1) or the switchable laser (10) is supplied with only one basic modulation frequency (F0) and wherein at least the first modulation frequency (F1) or the first and further modulation frequencies (F1, F2, ..., Fn) is/are supplied to the (second) modulator (11.2) provided as deflector;
**characterized in that**
a further acousto-optic modulator (11.3) provided as second deflector and comprising an alignment deflected about its longitudinal central axis in relation to the first deflector is arranged downstream of the second modulator that is provided as deflector, wherein the modulator (11.3) provided as second deflector is supplied with at least one first modulation frequency (F1') or the first and further modulation frequencies (F1', F2', ..., Fn'), thereby forming at least four laser beam paths (L1, L2, ..., Ln) extending to at least four focus points (FP1, FP2, ..., FPn; FP1', FP2', ..., FPn') that form a two-dimensional focus matrix (FM) on the surface (20) of the printing or embossing form (2).

8. Method according to Claim 7, **characterized in that** the acousto-optic modulator (11.3) provided as second deflector and comprising an alignment deflected about its longitudinal central axis in relation to the first deflector is deflected by 90 degrees.

9. Method according to Claim 7 or 8, **characterized in that** the modulator (11) or the second modulator (11.2) provided as deflector or the two modulators (11.2, 11.3) provided as deflectors is/are deflected about its/their longitudinal central axis by a specifiable angle (u), whereby the arrangement of the outcoming laser beam paths (L1, L2, ..., Ln) and the focus matrix (FM) formed by their focus points (FP1, FP2, ..., FPn; FP1', FP2', ..., FPn') on the surface (20) of the printing or embossing form (2) to be engraved undergo a corresponding deflection by this angle (u).

10. Method according to Claim 9, **characterized in that**, instead of the modulator (11) or the second modulator (11.2) that is provided as deflector or the two modulators (11.2, 11.3) that are provided as deflectors, the existing adjusting optics (13) or an additional adjusting optics is used for deflecting the arrangement of the laser beam paths (L1, L2, ..., Ln) and the focus matrix (FM).

11. Method according to anyone of the preceding claims, **characterized in that** a modulator crystal with at least two parallel acousto-optic fields (A1, A2, ..., An) is used as modulator (11, 11.3), wherein one each of the at least two incoming laser beams is passed into one of the fields (A1, A2, ..., An) respectively and wherein each acousto-optic field (A1, A2, ..., An) is fed with two or more modulation frequencies (F1, F2, ..., Fn; F1', F2', ..., Fn') via a common or each via its own frequency generator.

12. Method according to anyone of the Claims 7 through 10, **characterized in that** the at least two laser beams passed into the modulator (11) are generated by a laser (10) with at least one downstream beam splitter or by at least two lasers (10).

13. Method according to Claim 12, **characterized in that** the beam splitter(s) (16) and the modulator (11) are synchronously deflected about the longitudinal central axis of the modulator (11) by a specifiable angle (u), whereby the arrangement of the laser beam paths (L1, L2, ..., Ln) coming out of the modulator (11) and the focus matrix (FM) formed by their focus points (FP1, FP2, ..., FPn; FP1', FP2', ..., FPn') on the surface (20) of the printing or embossing form (2) to be engraved undergo a corresponding deflection by this angle (u).

14. Method according to Claim 13, **characterized in that**, instead of the beam splitter(s) (16) and the modulator (11), the existing adjusting optics (13) or an additional adjusting optics is used for deflecting the arrangement of the laser beam paths (L1, L2, ..., Ln) and the focus matrix (FM).

15. Method according to anyone of the preceding claims, **characterized in that** the power of the laser beams running along the laser beam paths (L1, L2, ..., Ln) to the focus points (FP1, FP2, ..., FPn; FP1', FP2', ..., FPn') on the surface (20) of the printing or embossing form (2) is controlled individually or in groups.

16. Method according to anyone of the preceding claims, **characterized in that** all laser beam paths (L1, L2, ..., Ln) extending to the focus points (FP1, FP2, ..., FPn; FP1', FP2', ... FPn') on the surface (20) of the printing or embossing form (2) are passed through the same adjusting optics (13) and through the same focusing optics (14).

17. Method according to anyone of Claims 1 through 16, **characterized in that** the laser beam paths (L1, L2, ..., Ln) extending to the focus points (FP1, FP2, ..., FPn; FP1', FP2', ..., FPn') on the surface (20) of the printing or embossing form (2) are, at least in part, each passed through an individual adjusting optics or, being comprised in lines or columns, through a group adjusting optics (13.1, 13.2).

## Revendications

1. Procédé pour faire fonctionner un appareil de gravure au laser (1) pour la gravure de plaques d'estampage ou de planches d'impression (2), avec un laser (10), avec un générateur de fréquences qui produit une première fréquence de modulation (F1) et avec un modulateur acousto-optique (11) pour la déviation et la répartition du faisceau laser en fonction de la fréquence, lequel modulateur est situé en aval du laser (10) et peut être alimenté par la première fréquence de modulation (F1), un chemin de faisceau laser (L0), partant du modulateur (11), conduisant à un absorbeur (12) et un deuxième chemin de faisceau laser (L1) conduisant à un point focal (FP1) sur la surface (20) de la plaque d'estampage ou la planche d'impression (2) à graver en passant par une optique d'adaptation (13) qui forme le faisceau laser et par une optique de focalisation (14) qui focalise le faisceau laser, au moins une autre fréquence de modulation (F2) différente de la première fréquence de modulation (F1) étant produite et amenée en même temps au modulateur acousto-optique (11), à côté de la première fréquence de modulation (F1), ce par quoi le faisceau laser, dans le modulateur acousto-optique (11), outre une première déviation, subit au moins une autre déviation différente de la première de par son angle et subit de ce fait une répartition additionnelle, et au moins un autre chemin de faisceau laser (L2) étant ainsi constitué, lequel conduit à au moins un autre point focal (FP2) également sur la surface (20) de la plaque d'estampage ou de la planche d'impression (2), au moins deux faisceaux laser parallèles situés dans un premier plan étant produits et introduits parallèlement dans le modulateur acousto-optique (11) et le modulateur acousto-optique (11) étant orienté de manière telle que, dans celui-ci, chaque faisceau laser entrant est réparti en respectivement au moins deux faisceaux laser situés dans un deuxième plan ayant subi une rotation par rapport au premier plan, ce par quoi au moins quatre chemins de faisceau laser (L1, L2, ..., Ln) sont constitués, lesquels conduisent à au moins quatre points focaux (FP1, FP2, ..., FPn; FP1', FP2', ..., FPn') sur la surface (20) de la plaque d'estampage ou de la planche d'impression (2), lesquels points focaux constituent une matrice focale bidimensionnelle (FM),
**caractérisé en ce que**
seul le modulateur (11) subit une rotation d'un angle prédéterminable (u) autour de son axe médian longitudinal, ce par quoi l'ensemble constitué par les chemins de faisceau laser (L1, L2, ..., Ln) sortants et une matrice focale (FM) constituée par leurs points focaux (FP1, FP2, ..., FPn; FP1', FP2', ..., FPn') sur la surface (20) de la plaque d'estampage ou de la planche d'impression (2) subissent une rotation de cet angle (u) correspondante.

2. Procédé selon la revendication 1, **caractérisé en ce que** le deuxième plan ayant subi une rotation par rapport au premier plan est perpendiculaire au premier plan.

3. Procédé selon la revendication 1 ou 2, **caractérisé en ce que** les fréquences de modulation (F1, F2, ..., Fn) sont variables et sont respectivement réglées sur une fréquence souhaitée.

4. Procédé selon la revendication 3, **caractérisé en ce que**, en tant qu'autre(s) fréquence(s) de modulation (F2, ..., Fn), respectivement une fréquence est produite et est amenée au modulateur acousto-optique (11), laquelle diffère de manière telle de la première fréquence de modulation (F1) que les points focaux produits (FP1, FP2, ..., FPn) prennent un écart latéral (v) les uns par rapport aux autres, lequel correspond à une avancée de la gravure dans le cas d'un point focal individuel.

5. Procédé selon la revendication 1 ou 2, **caractérisé en ce que** chaque autre fréquence de modulation (F2, ..., Fn) présente un écart de fréquence fixe par rapport à la première fréquence de modulation (F1).

6. Procédé selon la revendication 5, **caractérisé en ce que** les écarts de fréquence entre respectivement deux fréquences de modulation voisines (F1, F2, ..., Fn) sont identiques.

7. Procédé pour faire fonctionner un appareil de gravure au laser (1) pour la gravure de plaques d'estampage ou de planches d'impression (2), avec un laser (10), avec un générateur de fréquences qui produit une première fréquence de modulation (F1) et avec un modulateur acousto-optique (11) pour la déviation et la répartition du faisceau laser en fonction de la fréquence, lequel modulateur est situé en aval du laser (10) et peut être alimenté par la première fréquence de modulation (F1), un chemin de faisceau laser (L0), partant du modulateur (11), conduisant à un absorbeur (12) et un deuxième chemin de faisceau laser (L1) conduisant à un point focal (FP1) sur la surface (20) de la plaque d'estampage ou la planche d'impression (2) à graver en passant par une optique d'adaptation (13) qui forme le faisceau laser et par une optique de focalisation (14) qui focalise le faisceau laser, au moins une autre fréquence de modulation (F2) différente de la première fréquence de modulation (F1) étant produite et amenée en même temps au modulateur acousto-optique (11), à côté de la première fréquence de modulation (F1), ce par quoi le faisceau laser, dans le modulateur acousto-optique (11), outre une première déviation, subit au moins une autre déviation différente de la première de par son angle et subit de ce fait une répartition additionnelle, et au moins un autre chemin de faisceau laser (L2) étant ainsi constitué, lequel conduit à au moins un autre point focal (FP2) également sur la surface (20) de la plaque d'estampage ou de la planche d'impression (2),
soit un laser (10) de puissance constante, avec un premier modulateur acousto-optique (11.1) monté en aval en tant que modulateur de puissance pour la modulation de la puissance du faisceau laser, soit un laser commutable de manière suffisamment rapide (10) avec suppression de l'absorbeur (12) étant mis en oeuvre,
un (deuxième) modulateur acousto-optique (11.2), monté en aval et synchronisé sur le premier modulateur (11.1) ou le laser commutable (10), étant mis en oeuvre en tant que déflecteur pour répartir le faisceau laser modulé en puissance sur les au moins deux autres chemins de faisceau laser (L1, L2, ..., Ln), seule une fréquence de modulation de base (F0) étant amenée au premier modulateur (11.1) ou au laser commutable (10) et au moins la première fréquence de modulation (F1) ou la première et d'autres fréquences de modulation (F1, F2, ..., Fn) étant amenée(s) au (deuxième) modulateur (11.2) servant de déflecteur,
**caractérisé en ce que**
un autre modulateur acousto-optique (11.3) servant de deuxième déflecteur est monté en aval du (deuxième) modulateur (11.2) servant de déflecteur, et ce avec une orientation ayant subi une rotation autour de son axe médian longitudinal relativement au premier déflecteur, au moins une première fréquence de modulation (F1') ou la première et d'autres fréquences de modulation (F1', F2', ..., Fn') étant amenée(s) au modulateur (11.3) servant de deuxième déflecteur, ce par quoi au moins quatre chemins de faisceau laser (L1, L2, ..., Ln) sont constitués, lesquels conduisent à au moins quatre points focaux (FP1, FP2, ..., FPn; FP1', FP2', ..., FPn') sur la surface (20) de la plaque d'estampage ou de la planche d'impression (2), lesquels points focaux constituent une matrice focale bidimensionnelle (FM).

8. Procédé selon la revendication 7, **caractérisé en ce que** le modulateur acousto-optique (11.3) servant de deuxième déflecteur, lequel présente une orientation ayant subi une rotation autour de son axe médian longitudinal relativement au premier déflecteur, a subi une rotation de 90°.

9. Procédé selon la revendication 7 ou 8, **caractérisé en ce que** le (deuxième) modulateur (11.2) mis en oeuvre en tant que déflecteur ou les deux modulateurs (11.2, 11.3) mis en oeuvre en tant que déflecteurs subit / subissent une rotation d'un angle (u) prédéterminable autour de son / de leur axe médian longitudinal, ce par quoi l'ensemble constitué par les chemins de faisceau laser (L1, L2, ..., Ln) sortants et une matrice focale (FM) constituée par leurs points focaux (FP1, FP2, ..., FPn; FP1', FP2', ..., FPn') sur la surface (20) de la plaque d'estampage ou de la planche d'impression (2) à graver subissent une rotation de cet angle (u) correspondante.

10. Procédé selon la revendication 9, **caractérisé en ce que**, au lieu du modulateur (11) ou du deuxième modulateur (11.2) mis en oeuvre en tant que déflecteur ou des deux modulateurs (11.2, 11.3) mis en oeuvre en tant que déflecteurs, on met en oeuvre, pour la rotation de l'ensemble constitué par les chemins de faisceau laser (L1 L2, ..., Ln) et de la matrice focale (FM), l'optique d'adaptation (13) présente ou une optique d'adaptation supplémentaire.

11. Procédé selon l'une des revendications précédentes, **caractérisé par** la mise en oeuvre, en tant que modulateur (11, 11.3), d'un cristal modulateur avec au moins deux champs acousto-optiques (A1 A2, ..., An) parallèles, respectivement l'un des au moins deux faisceaux laser entrants étant introduit dans respectivement l'un des champs (A1, A2, ..., An) et chaque champ acousto-optique (A1, A2, ..., An) étant alimenté par respectivement deux fréquences de modulation ou plus (F1, F2, ..., Fn; F1', F2', ..., Fn') par l'intermédiaire d'un générateur de fréquences commun ou propre à chacun.

12. Procédé selon l'une des revendications 7 à 10, **caractérisé en ce que** les au moins deux faisceaux laser entrant dans le modulateur (11) sont produits par un laser (10) avec au moins un séparateur de faisceau (16) monté en aval ou par au moins deux lasers (10).

13. Procédé selon la revendication 12, **caractérisé en ce que** le / les séparateur(s) de faisceau (16) et le modulateur (11) subissent en synchrone une rotation d'un angle prédéterminable (u) autour de l'axe médian longitudinal du modulateur (11), ce par quoi l'ensemble constitué par les chemins de faisceau laser (L1, L2, ..., Ln) sortant du modulateur (11) et la matrice focale (FM) constituée par leurs points focaux (FP1, FP2, ..., FPn; FP1', FP2', ..., FPn') sur la surface (20) de la plaque d'estampage ou de la planche d'impression (2) à graver subissent une rotation de cet angle (u) correspondante.

14. Procédé selon la revendication 13, **caractérisé en ce que**, au lieu du / des séparateur(s) de faisceau (16) et du modulateur (11), on met en oeuvre, pour la rotation de l'ensemble constitué par les chemins de faisceau laser (L1, L2, ..., Ln) et de la matrice focale (FM), l'optique d'adaptation (13) présente ou une optique d'adaptation supplémentaire.

15. Procédé selon l'une des revendications précédentes, **caractérisé en ce que** la puissance des faisceaux laser passant par les chemins de faisceau laser (L1, L2, ..., Ln) et allant vers les points focaux (FP1, FP2, ..., FPn; FP1', FP2', ..., FPn') sur la surface (20) de la plaque d'estampage ou de la planche d'impression (2) est commandée individuellement ou en groupes.

16. Procédé selon l'une des revendications précédentes, **caractérisé en ce que** tous les chemins de faisceau laser (L1, L2, ..., Ln) allant vers les points focaux (FP1, FP2, ..., FPn; FP1', FP2', ..., FPn') sur la surface (20) de la plaque d'estampage ou de la planche d'impression (2) passent par la même optique d'adaptation (13) et par la même optique de focalisation (14).

17. Procédé selon l'une des revendications 1 à 16, **caractérisé en ce que** les chemins de faisceau laser (L1, L2, ..., Ln) allant vers les points focaux (FP1, FP2, ..., FPn; FP1', FP2', ..., FPn') sur la surface (20) de la plaque d'estampage ou de la planche d'impression (2) passent au moins en partie par respectivement une optique d'adaptation individuelle ou, regroupés en lignes ou en colonnes, par respectivement une optique d'adaptation de groupes (13.1, 13.2).
